# EUROPÄISCHE PATENTSCHRIFT

(11) **EP 4 158 530 B1**
(45) Veröffentlichungstag und Bekanntmachung des Hinweises auf die Patenterteilung: **09.12.2026**
(21) Anmeldenummer: 21729280.4
(22) Anmeldetag: 26.05.2021
(51) Int. Cl.: G06V 20/56, G01C 21/00, G01C 21/32, G06F 18/25

(54) **VERFAHREN UND VORRICHTUNG ZUM BEREITSTELLEN EINER HOCHAUFLÖSENDEN DIGITALEN KARTE**
METHOD AND DEVICE FOR PROVIDING A HIGH-DEFINITION DIGITAL MAP
PROCÉDÉ ET DISPOSITIF POUR FOURNIR UNE CARTE NUMÉRIQUE À HAUTE RÉSOLUTION

(30) Priorität: 27.05.2020 DE 102020206641
(43) Veröffentlichungstag der Anmeldung: 05.04.2023
(73) Patentinhaber: Robert Bosch GmbH, 70442 Stuttgart (DE)
(72) Erfinder: LATTEMANN, Frank, 70569 Stuttgart (DE); NGO, Thanh Danh Anthony, 70597 Stuttgart (DE); KRUMMEL, Christian, 72138 Kirchentellinsfurt (DE)
(86) Internationale Anmeldenummer: PCT/EP2021/063999
(87) Internationale Veröffentlichungsnummer: WO 2021/239789

(56) Entgegenhaltungen:
- DE-A1- 102017 207 257
- US-A1- 2019 228 262

## Beschreibung

Die Erfindung betrifft ein Verfahren zum Bereitstellen einer hochauflösenden digitalen Karte. Die Erfindung betrifft ferner eine Vorrichtung zum Bereitstellen einer hochauflösenden digitalen Karte. Die Erfindung betrifft ferner ein Computerprogrammprodukt.

### Stand der Technik

Automatisiertes Fahren ist heutzutage einer der großen Trends in der Automobilindustrie. In den letzten zehn Jahren haben die Automobilhersteller die Anzahl und die Funktionen ihrer Fahrerassistenzsysteme schrittweise erhöht. Neben technischen Aspekten der Realisierung eines vollautomatisierten Fahrzeugs stellt die Validierung und Zulassung die Automobilindustrie vor große Herausforderungen. Gründe dafür sind zum einen die Komplexität der Interaktionen mit der Umgebung und zum anderen die Schwierigkeit beim Nachweis, dass ein automatisiertes Fahrzeug bezogen auf die Sicherheit mindestens die gleiche Leistung wie ein menschlicher Fahrer erbringt.

Es ist abzusehen, dass ausschließlich reale Fahrzeugtests für die Validierung wirtschaftlich nicht durchführbar sind. Aus diesem Grund wird die Simulation als Schlüsselelement für die Entwicklung sowie für die Validierung vollautomatisierter Fahrzeuge angesehen. Der simulationsbasierte Fahrversuch stellt somit einen wesentlichen Pfeiler der Verifikations- und Validierungsstrategie dar. Für aussagekräftige Simulationen müssen jedoch alle angewandten Modelle vorab validiert werden. Die abzusichernden Funktionen stützen sich auf virtuelle Modelle der Umfeldsensorik des Fahrzeugs. Zur Absicherung der Fahrfunktionen werden hochgenaue Sensormodelle (d.h. mathematische Nachbildungen von realen Sensoren) benötigt, jedoch fehlen derzeit allgemein anerkannte Qualitätskriterien zur Evaluierung und Validierung solcher Sensormodelle. Denn konventionelle Karten liefern weder eine ausreichende Auflösung noch genügend Informationen über die Umgebung für das vollautomatisierte System. Dabei sind die Anforderungen an die Sicherheit besonders in urbanen Gebieten mit einer hohen Verkehrsdichte enorm. Die in heutigen hochauflösenden Karten enthaltenen Informationen werden als sogenannte Schichten dargestellt, die jeweils unterschiedliche Aspekte der Umgebung beschreiben. Dabei existieren unterschiedliche Definitionen, welche Informationen speziell welche Schicht beinhaltet. Jedoch befinden sich häufig auf der Basisschicht die Informationen über das Straßennetzwerk. Darauf aufbauend beschreiben die weiteren Schichten zum Beispiel Verkehrszeichen, statische Objekte wie z.B. Gebäude, Bäume, usw.

Die Offenlegungsschrift US 2019/0228262 A1 offenbart ein Verfahren zum Aktualisieren HD-Karte.

Die Offenlegungsschrift DE 10 2017 207 257 A1 offenbart ein Verfahren und eine Vorrichtung zum Erstellen und Bereitstellen einer hochgenauen Karte.

### Offenbarung der Erfindung

Die Erfindung ist in den unabhängigen Ansprüchen dargelegt.

Es ist eine Aufgabe der vorliegenden Erfindung, ein Verfahren zum verbesserten Bereitstellen einer hochauflösenden digitalen Karte für ein wenigstens teilweise automatisiertes Fahrzeug bereitzustellen.

Die Aufgabe wird gemäß einem ersten Aspekt gelöst mit einem Verfahren zum Bereitstellen einer hochauflösenden digitalen Karte mit den Schritten:
- Lokalisieren einer Einrichtung, insbesondere eines Fahrzeugs;
- Bereitstellen von Sensordaten an einer lokalisierten Position während einer Messfahrt der Einrichtung;
- Ermitteln von Erkennungsindikatoren für wenigstens ein mittels der bereitgestellten Sensordaten erkanntes Objekt an der lokalisierten Position;
- Hinzufügen wenigstens einer Zusatzschicht zur hochauflösenden digitalen Karte, wobei die wenigstens eine weitere Zusatzschicht die Erkennungsindikatoren für das wenigstens eine erkannte Objekt beinhaltet.

Die wenigstens eine Zusatzschicht dient als sogenannter "confidence layer" zum Verifizieren von Sensormodellen. Derartige Zusatzschichten basierend auf reinen Sensorinformationen würden viel zu viele Daten umfassen. Die derart erweiterte hochauflösende digitale Karte kann vorteilhaft benutzt werden, um eine Algorithmik von Sensormodellen zu verbessern, die dadurch validiert und verbessert werden können. Dies ermöglicht im Ergebnis eine kostengünstige Validierung von Sensormodellen. Die Erstellung der hochauflösenden digitalen Karte basiert auf realen Sensordaten von Messfahrten, die ohnehin durchgeführt werden müssen, um Sensorik zu testen. Im Ergebnis kann die erfindungsgemäß erweiterte hochauflösende digitale Karte mit geringem Mehraufwand erzeugt werden.

Die Aufgabe wird gemäß einem zweiten Aspekt gelöst mit einer Vorrichtung zum Bereitstellen einer hochauflösenden digitalen Karte, aufweisend:
- wenigstens eine Sensoreinrichtung zum Bereitstellen von Sensordaten während einer Messfahrt;
- eine Lokalisierungseinrichtung zum Lokalisieren einer Einrichtung, insbesondere eines Fahrzeugs;
- eine Erkennungseinrichtung zum Ermitteln von Erkennungsindikatoren wenigstens ein aus den bereitgestellten Sensordaten erkanntes Objekt; und
- eine Hinzufügungseinrichtung zum Hinzufügen wenigstens einer Zusatzschicht zur hochauflösenden digitalen Karte, wobei die wenigstens eine Zusatzschicht die Erkennungsindikatoren für das wenigstens eine erkannte Objekt beinhaltet.

Gemäß einem dritten Aspekt wird die Aufgabe gelöst mit einem Computerprogrammprodukt mit Programmcodemitteln zur Durchführung des vorgeschlagenen Verfahrens, wenn es auf einer vorgeschlagenen elektronischen Vorrichtung abläuft oder auf einem computerlesbaren Datenträger gespeichert ist.

Vorteilhafte Weiterbildungen des Verfahrens sind Gegenstand von jeweils abhängigen Ansprüchen.

Eine vorteilhafte Weiterbildung des Verfahrens sieht vor, dass für jeden Sensortyp eine Zusatzschicht erstellt wird. Im Ergebnis kann dadurch für jeden Sensortyp (z.B. Radar, Lidar, Kamera, usw.) eine Zusatzschicht erstellt werden, sodass dadurch eine Möglichkeit der Verifizierung von Sensormodellen noch weiter verbessert ist.

Eine weitere vorteilhafte Weiterbildung des Verfahrens sieht vor, dass wobei die Erkennungsindikatoren pro Sensortyp ermittelt werden. Dadurch ist eine optimale Diversifizierung der Erkennungsindikatoren für die jeweilige Zusatzschicht der hochauflösenden digitalen Karte unterstützt.

Eine weitere vorteilhafte Weiterbildung des Verfahrens sieht vor, dass die Erkennungsindikatoren wenigstens eines aus Folgendem sind: Distanz, bei der das Objekt erkannt wurde, eine Wahrscheinlichkeit, mit der das Objekt erkannt wurde. Beispielsweise können dadurch die Erkennungsindikatoren für konkrete statische Objekte ermittelt werden.

Eine weitere vorteilhafte Weiterbildung des Verfahrens sieht vor, dass wobei die Erkennungsindikatoren auf definierte Witterungsbedingungen bezogen sind oder wobei Daten betreffend Witterungsbedingungen in der hochauflösenden digitalen Karte hinterlegt werden. Dadurch werden vorteilhaft unterschiedliche Möglichkeiten bereitgestellt, die Erkennungsindikatoren für unterschiedliche Witterungsbedingungen bereitzustellen.

Weitere vorteilhafte Weiterbildungen des Verfahrens sehen vor, dass die Erkennungsindikatoren beim Durchführen der Messfahrt oder nach dem Durchführen der Messfahrt ermittelt werden. Vorteilhaft werden dadurch unterschiedliche Möglichkeiten zur Ermittlung der Erkennungsindikatoren bereitgestellt.

Eine weitere vorteilhafte Weiterbildung des Verfahrens sieht vor, dass die Erkennungsindikatoren im Fahrzeug oder in der Cloud ermittelt werden. Auch auf diese Weise werden vorteilhaft unterschiedliche Möglichkeiten zur Ermittlung der Erkennungsindikatoren bereitgestellt.

Eine weitere vorteilhafte Weiterbildung des Verfahrens sieht vor, dass bei der Lokalisierung mittels der bereitgestellten Sensordaten Verortungsdaten mittels eines SLAM-Algorithmus erstellt werden. Vorteilhaft werden auf die beiden genannten Weisen unterschiedliche Arten der Lokalisierung mittels der bereitgestellten Sensordaten durchgeführt.

Eine weitere vorteilhafte Weiterbildung des Verfahrens sieht vor, dass eine geschätzte Trajektorie ermittelt wird. Beispielsweise können die geschätzten Trajektorien mittels eines an sich bekannten SLAM-Algorithmus bereitgestellt werden, sodass dadurch die Sensormodelle auch mittels SLAM-Algorithmen überprüft werden können.

Eine weitere vorteilhafte Weiterbildung des Verfahrens sieht vor, dass Sensordaten für wenigstens einen der folgenden Sensortypen ermittelt werden: Radar, Lidar, Kamera, Ultraschall. Vorteilhaft ist das vorgeschlagene Verfahren somit für unterschiedliche Sensortypen geeignet.

Die Erfindung wird im Folgenden mit weiteren Merkmalen und Vorteilen anhand von zwei Figuren detailliert beschrieben. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung, sowie unabhängig von ihrer Formulierung bzw. Darstellung in der Beschreibung bzw. in den Figuren.

Offenbarte Merkmale und Vorteile des Verfahrens ergeben sich in analoger Weise aus offenbaren Merkmalen und Vorteilen der Vorrichtung und umgekehrt.

In den Figuren zeigt:
- Fig. 1: einen prinzipiellen Ablauf einer Ausführungsform des vorgeschlagenen Verfahrens; und
- Fig. 2: ein Blockschaltbild eines vorgeschlagenen elektronischen Systems zur Durchführung des vorgeschlagenen Verfahrens.

### Beschreibung von Ausführungsformen

Ein Kerngedanke der vorliegenden Erfindung liegt insbesondere in einer Erweiterung einer hochauflösenden digitalen Karte (engl. High-Definition Map, HD Map) derart, dass mit der hochauflösenden digitalen Karte eine sowohl qualitative als auch quantitative Evaluierung von Sensormodellen ermöglicht wird. Hochauflösende digitale Karten spielen im Bereich des autonomen Fahrens eine essentielle Rolle.

Vorgeschlagen wird mit der Erfindung, eine verbesserte hochauflösende digitale Karte 300 für ein wenigstens teilweise automatisiertes Fahrzeug bereitzustellen. Insbesondere umfasst die Erweiterung einer derartigen hochauflösenden digitalen Karte 300 eine weitere Zusatzschicht 310a...310n, die sogenannte sensorspezifische Vertrauens- bzw. Erkennungsindikatoren, sogenannte (engl. Key Performance Indicators, KPI) aufweist.

Diese Erkennungsindikatoren repräsentieren Leistungskennzahlen, anhand derer der Fortschritt oder der Erfüllungsgrad hinsichtlich wichtiger Zielsetzungen oder kritischer Erfolgsfaktoren gemessen werden kann. Sie werden aus den Anforderungen an die Sensorik oder auch aus weiteren Verarbeitungsstufen wie zum Beispiel einer Objektdetektion definiert. Um diese Leistungskennzahlen als Basis für einen Vergleich mit den generierten Sensordaten aus der Simulation zu nutzen, bedarf es Toleranzen, zu bestimmen, innerhalb derer das Ergebnis der Sensormodelle als akzeptabel anzusehen ist, da zu erwarten ist, dass sich die realen Sensordaten (aus echten Messfahrten) und die synthetischen Sensordaten (aus Simulationsfahrten mit Sensormodellen) zu einem gewissen Grad unterscheiden werden. Dazu werden Messfahrten mit realen Sensoren durchgeführt und die Schwellwerte betreffend Lokalisierungsgüte anhand der resultierenden Messdaten berechnet und in der hochauflösenden digitalen Karte 300 markiert.

Nachfolgend wird der Begriff "automatisiertes Fahrzeug" synonym mit den Begriffen "vollautomatisiertes Fahrzeug", "autonomes Fahrzeug" und "teilautonomes Fahrzeug" verwendet.

Die Schritte zur Generierung der wenigstens einen Zusatzschicht 310a...310n werden nachfolgend näher erläutert. Zu Beginn wird die aktuelle Position einer Einrichtung, insbesondere in Form eines automatisierten Fahrzeugs ermittelt. Zu diesem Zweck kann vorzugsweise eine Verortungseinrichtung zur Bereitstellung von GNSS- bzw.

GPS-Daten verwendet werden, die für eine Verortung eines Messfahrzeugs (nicht dargestellt) verwendet wird. Mit dem Messfahrzeug wird im Rahmen einer Messfahrt ein sensorisches Erfassen von Umgebungsdaten mittels einer Sensoreinrichtung durchgeführt, wobei als Sensoreinrichtungen z.B. ein Radarsensor, und/oder ein Lidarsensor und/oder eine Kamera und/oder eine Ultraschallsensor verwendet werden kann. Auf diese Weise kann eine Position der Einrichtung genau bestimmt werden, wobei zu diesem Zweck jedes geeignete Ortungsverfahren verwendet werden kann.

Nach der Erfassung der einzelnen Sensordaten können die jeweiligen Erkennungsindikatoren für wenigstens ein aus den Sensordaten erkanntes Objekt berechnet werden. Hierzu wird die aktuelle Position des Fahrzeugs verwendet, um die berechneten Werte in eine hochauflösende digitale Karte 300 transformieren zu können. Das Berechnen der Erkennungsindikatoren kann für einen, mehrere oder alle vom automatisierten Messfahrzeug benutzten Sensortypen durchgeführt werden. Dabei kann vorgesehen sein, dass für jeden verwendeten Sensortyp eine eigene Zusatzschicht 310a...310n zur hochauflösenden digitalen Karte 300 hinzugefügt wird.

Dabei kann zum Beispiel mit den erfassten Sensordaten ein statisches Objekt erkannt werden (z.B. Ampel, Verkehrszeichen, Gebäude, usw.). Beispielsweise kann als Erkennungsindikator angegeben sein, bei welcher Entfernung (z.B. bei 50 m) ein statisches Objekt mit der Sensoreinrichtung erkannt wird und/oder mit welcher Wahrscheinlichkeit das statische Objekt mit der Sensoreinrichtung erkannt wurde, usw. Alternativ oder zusätzlich kann mit den erfassten Sensordaten ein Ermitteln einer prädizierten Trajektorie mittels eines an sich bekannten SLAM-Algorithmus durchgeführt werden. Auf diese Art und Weise wird eine Zusatzschicht 310a...310n erstellt, die sensorspezifischen Eigenschaften als Erweiterung der hochauflösenden digitalen Karte 300 bereitstellt.

Optional kann vorgesehen sein, die genannten Erkennungsindikatoren bei definierten Witterungsverhältnissen (z.B. klare Sicht mit Sonnenschein, Nacht, Nebel, Regen, usw.) zu erstellen oder Daten betreffend die Witterungsverhältnisse als zusätzliche Informationen innerhalb der Zusatzschicht 310a...310n in der hochauflösenden digitalen Karte 300 zu hinterlegen.

Die derart verbesserte hochauflösende digitale Karte 300 kann vorteilhaft als Basis für die Validierung von Sensormodellen dienen, um dadurch zu verifizieren, dass die entwickelten Sensormodelle ausreichend genau und mit korrekten Eigenschaften modelliert sind. Dabei werden aus den realen Messfahrten die beobachteten Szenarien extrahiert, um diese in der Simulation nachzubilden. Das Szenario kann somit in der virtuellen Umgebung mit den entwickelten Sensormodellen nachsimuliert werden. Durch eine Berechnung der Erkennungsindikatoren in der Simulation kann ein Vergleich zwischen den Erkennungsindikatoren durchgeführt werden, die mit realen und mit synthetisch basierten Sensordaten ermittelt wurden.

Im Ergebnis wird dadurch eine Diskrepanz einer Leistungsfähigkeit zwischen der realen Sensorik und den Sensormodellen nicht nur sichtbar, sondern auch quantifiziert aufgezeigt. Des Weiteren ermöglicht die dargestellte Methodik nicht nur die Sensormodelle zu validieren, sondern auch validierte positionsabhängige Modelle in der Simulation zu verwenden.

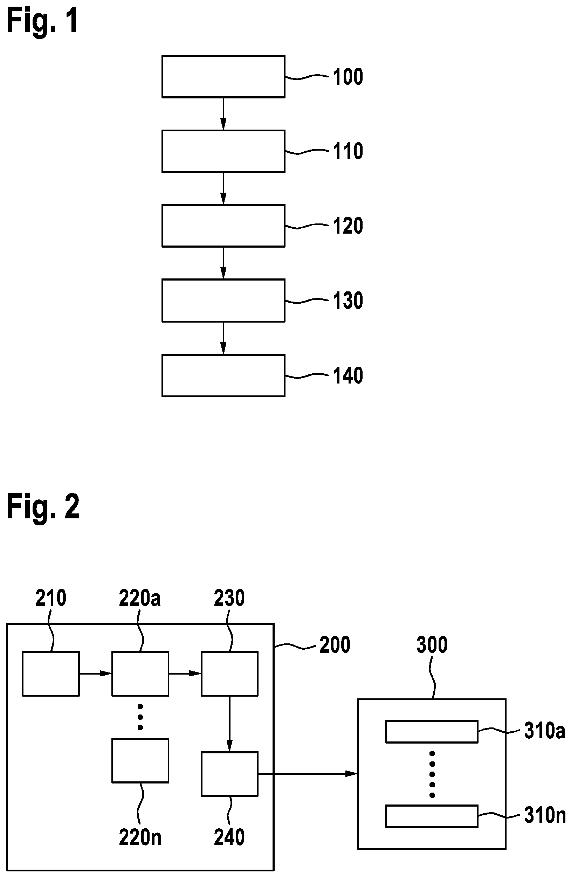

Fig. 1 zeigt stark schematisch einen prinzipiellen Ablauf eines vorgeschlagenen Verfahrens.

In einem Schritt 100 wird eine Einrichtung, insbesondere ein Fahrzeug lokalisiert.

In einem Schritt 110 wird ein Bereitstellen von Sensordaten an einer lokalisierten Position während einer Messfahrt der Einrichtung durchgeführt.

In einem Schritt 120 wird ein Ermitteln von Erkennungsindikatoren für wenigstens ein mittels der bereitgestellten Sensordaten erkanntes Objekt an der lokalisierten Position durchgeführt.

In einem Schritt 130 wird ein Hinzufügen wenigstens einer Zusatzschicht 310a...310n zur hochauflösenden digitalen Karte 300 durchgeführt, wobei die wenigstens eine weitere Zusatzschicht 310a...310n die Erkennungsindikatoren für das wenigstens eine erkannte Objekt beinhaltet.

Im Ergebnis wird dadurch eine erweiterte hochauflösende digitale Karte 300 für eine Einrichtung, z.B. für ein wenigstens teilweise automatisiertes Fahrzeug bereitgestellt, mit dem in einem nachfolgenden Simulationsprozess Sensormodelle effizient simuliert bzw. validiert werden können. Ein Aufwand zur Validierung der Sensormodelle kann auf diese Weise vorteilhaft minimiert werden.

Im Folgenden wird der vorgeschlagene Ablauf anhand eines Beispiels näher durchleuchtet. Hierfür bietet sich der sogenannte "Simultaneous Localization and Mapping" (SLAM) Algorithmus als ein Beispiel an, um die beschriebene Methodik zu erläutern.

Der SLAM-Algorithmus zeichnet sich dadurch aus, dass er mit allen (z.B. drei) Sensorarten (z.B. Radar, Lidar, Kamera) benutzt werden kann. Das Ziel des SLAM-Algorithmus ist es, gleichzeitig eine konsistente hochauflösende digitale Karte 300 des Umfelds zu erzeugen und die eigene Position innerhalb dieser hochauflösenden digitalen Karte 300 zu schätzen. Folglich resultiert als Ergebnis einer Messfahrt sowohl eine hochauflösende digitale Karte der Umgebung als auch eine prädizierte Trajektorie.

Um den SLAM-Algorithmus zu bewerten, kann beispielsweise der absolute Fehler der Trajektorienschätzung gegenüber den GNSS-Daten als Vertrauensindikator berechnet werden. Da anzunehmen ist, dass sich diese Abweichung für jeden Sensortyp unterscheiden wird, werden die Ergebnisse aller Sensortypen abgespeichert und als eine neue Schicht 310a...310n der hochauflösenden digitale Karte 300 hinzugefügt. Dadurch kann das aktuelle Evaluierungsergebnis des Systems in der hochauflösenden digitalen Karte 300 festgehalten werden.

Dies hat den Vorteil, dass für anschließende Untersuchungen, wie zum Beispiel einer Resimulation einer Messfahrt oder den Vergleich nach einem Systemupdate, die berechneten Vertrauensindikatoren des letzten Systemstands positionsabhängig abgespeichert sind und somit ein Vergleich effizient durchgeführt werden kann, ohne die Ergebnisse neu zu berechnen.

Fig. 2 zeigt ein prinzipielles Blockschaltbild eines vorgeschlagenen elektronischen Systems 200 zum Ermitteln einer hochauflösenden digitalen Karte 300.

Man erkennt wenigstens eine Sensoreinrichtung 220a...220n zum Bereitstellen von Sensordaten, die während einer durchgeführten Messfahrt aufgezeichnet werden. Mit der Sensoreinrichtung 220a...220n funktional verbunden ist eine Lokalisierungseinrichtung 210 zum Lokalisieren der Einrichtung. Funktional mit der Lokalisierungseinrichtung 20 verbunden ist eine Erkennungseinrichtung 230 zum Ermitteln der oben näher erläuterten Erkennungsindikatoren für wenigstens ein mittels der bereitgestellten Sensordaten erkanntes Objekt. Funktional mit der Erkennungseinrichtung 230 verbunden ist eine Hinzufügungseinrichtung 240 zum Hinzufügen wenigstens einer Zusatzschicht 310a...310n zur hochauflösenden digitalen Karte 300 mit mehreren Schichten 310a...310n, die spezifische Informationen, wie z.B. Fahrbahnbegrenzungen, Verkehrszeichen, Gebäude, usw. enthalten. Die wenigstens eine Zusatzschicht 310a...310n weist die Erkennungsindikatoren für das wenigstens eine erkannte Objekt auf.

Vorteilhaft kann das vorgeschlagene System 200 im automatisierten Messfahrzeug oder in der Cloud angeordnet sein. Im ersten Fall wird das Ermitteln der Zusatzschicht 310a...310n direkt beim Erfassen der Sensordaten durchgeführt. Im zweiten Fall kann das Ermitteln der Zusatzschicht 310a...310n während der Messfahrt oder nach deren Beendigung durchgeführt werden.

Als eine besondere Nutzanwendung kann mit der erfindungsgemäß erweiterten hochauflösenden digitalen Karte 300 eine Validierung der Sensormodelle erfolgen. Auf diese Weise kann nachgewiesen werden kann, dass die Sensormodelle die Lokalisierung mittels der hochauflösenden digitalen Karte 300 in ähnlich guter Weise durchführen wie reale Sensoreinrichtungen mittels realer Sensordaten. Auf diese Weise lassen sich die Sensoreinrichtungen mittels Simulationsverfahren effizient testen. Im Ergebnis kann dies in der Praxis zu einer wirkungsvollen Validierung von automatisierten Fahrzeugen mit Hilfe von Simulationsprozessen beitragen.

Vorteilhaft lässt sich das vorgeschlagene Verfahren als eine Software realisieren, die beispielsweise auf der Vorrichtung 200 abläuft. Eine einfache Adaptierbarkeit des Verfahrens ist auf diese Weise unterstützt.

## Patentansprüche

1. Verfahren zum Bereitstellen einer hochauflösenden digitalen Karte (300), aufweisend die Schritte:
- Lokalisieren einer Einrichtung, insbesondere eines Fahrzeugs;
- Sensorisches Erfassen von Umgebungsdaten mittels wenigstens einer Sensoreinrichtung an einer lokalisierten Position der Einrichtung während einer Messfahrt der Einrichtung, wobei die sensorisch erfassten Umgebungsdaten für wenigstens zwei der folgenden Sensortypen erfasst werden: Radar, Lidar, Kamera, Ultraschall;
- Ermitteln von Erkennungsindikatoren für wenigstens ein mittels der sensorisch erfassten Umgebungsdaten erkanntes Objekt an der lokalisierten Position;
- Hinzufügen wenigstens einer Schicht (310a...310n) zur hochauflösenden digitalen Karte (300), wobei die wenigstens eine Schicht (310a...310n) die Erkennungsindikatoren für das wenigstens eine erkannte Objekt entsprechend dem für das sensorische Erfassen der Umgebungsdaten verwendeten wenigstens einen Sensortyp der für das sensorische Erfassen der Umgebungsdaten verwendeten Sensoreinrichtung beinhaltet,
- wobei für jeden Sensortyp eine Schicht (310a...310n) für die hochauflösende digitale Karte (300) erstellt und der hochauflösenden digitalen Karte (300) hinzugefügt wird
- wobei die hochauflösende Karte (300) für eine Validierung eines Sensormodells eingesetzt wird, indem:
- ein Szenario aus der Messfahrt extrahiert und in einer virtuellen Umgebung nachsimuliert wird,
- ein Vergleich zwischen den ermittelten Erkennungsindikatoren und mit synthetischen Umgebungsdatenermittelten Erkennungsindikatoren durchgeführt wird, und
- eine Diskrepanz einer Leistungsfähigkeit zwischen der Sensoreinrichtung und dem Sensormodell quantifiziert aufgezeigt wird.

2. Verfahren nach Anspruch 1, wobei die Erkennungsindikatoren pro Sensortyp ermittelt werden.

3. Verfahren nach einem der vorhergehenden Ansprüche, wobei die Erkennungsindikatoren wenigstens eines aus Folgendem sind: Distanz zwischen der Einrichtung und dem Objekt, bei der das Objekt erkannt wurde, eine Wahrscheinlichkeit, mit der das Objekt erkannt wurde.

4. Verfahren nach einem der vorhergehenden Ansprüche, wobei die Erkennungsindikatoren auf definierte Witterungsbedingungen bezogen sind oder wobei Daten betreffend Witterungsbedingungen in der hochauflösenden digitalen Karte (300) hinterlegt werden.

5. Verfahren nach einem der vorhergehenden Ansprüche, wobei die Erkennungsindikatoren beim Durchführen der Messfahrt oder nach dem Durchführen der Messfahrt ermittelt werden.

6. Verfahren nach einem der vorhergehenden Ansprüche, wobei die Einrichtung ein Fahrzeug ist und die Erkennungsindikatoren im Fahrzeug oder in der Cloud ermittelt werden.

7. Verfahren nach einem der vorhergehenden Ansprüche, wobei bei der Lokalisierung mittels der bereitgestellten Sensordaten Verortungsdaten mittels eines SLAM-Algorithmus erstellt werden, sodass auf die beiden genannten Weisen unterschiedliche Arten der Lokalisierung mittels der bereitgestellten Sensordaten durchgeführt wird.

8. Verfahren nach Anspruch 7, wobei eine geschätzte Trajektorie von einem elektronischen System (200) ermittelt wird.

9. Elektronisches System (200) zum Bereitstellen einer hochauflösenden digitalen Karte (300), aufweisend:
- eine Lokalisierungseinrichtung (210) zum Lokalisieren einer Einrichtung;
- wenigstens eine Sensoreinrichtung (220a...220n) zum Bereitstellen von sensorisch erfassten Umgebungsdaten an einer lokalisierten Position der Einrichtung während einer Messfahrt;
- eine Erkennungseinrichtung (230) zum Ermitteln von Erkennungsindikatoren für wenigstens ein mittels der bereitgestellten sensorisch erfassten Umgebungsdaten erkanntes Objekt an der lokalisierten Position; und
- eine Hinzufügungseinrichtung (240) zum Hinzufügen wenigstens einer Schicht (310a...310n) zur hochauflösenden digitalen Karte (300), wobei die wenigstens eine Schicht (310a... 310n) die Erkennungsindikatoren für das wenigstens eine erkannte Objekt entsprechend dem für das sensorische Erfassen der Umgebungsdaten verwendeten wenigstens einen Sensortyp der für das sensorische Erfassen der Umgebungsdaten verwendeten Sensoreinrichtung beinhaltet,
- wobei für jeden Sensortyp eine Schicht (310a...310n) für die hochauflösende digitale Karte (300) erstellt und der hochauflösenden digitalen Karte (300) hinzugefügt wird.

10. Computerprogrammprodukt mit Programmcodemitteln zur Durchführung des Verfahrens nach einem der Ansprüche 1 bis 8, wenn es auf einem elektronischen System (200) zum Bereitstellen einer hochauflösenden digitalen Karte (300) abläuft oder auf einem computerlesbaren Datenträger gespeichert ist.

## Claims

1. Method for providing a high-resolution digital map (300), having the steps of:
- localizing a device, in particular a vehicle;
- capturing environmental data by way of sensors by means of at least one sensor device at a localized position of the device during a measurement run of the device, wherein the environmental data captured by way of sensors are captured for at least two of the following sensor types: radar, lidar, camera, ultrasound;
- determining recognition indicators for at least one object at the localized position that is recognized by means of the environmental data captured by way of sensors;
- adding at least one layer (310a...310n) to the high-resolution digital map (300), wherein the at least one layer (310a...310n) contains the recognition indicators for the at least one recognized object corresponding to the at least one sensor type of the sensor device used to capture the environmental data by way of sensors, which sensor type is used to capture the environmental data by way of sensors,
- wherein, for each sensor type, a layer (310a... 310n) is created for the high-resolution digital map (300) and added to the high-resolution digital map (300),
- wherein the high-resolution map (300) is used to validate a sensor model by:
- extracting a scenario from the measurement run and subsequently simulating it in a virtual environment,
- comparing the determined recognition indicators and recognition indicators determined with synthetic environmental data, and
- showing in quantified form a discrepancy in performance between the sensor device and the sensor model.

2. Method according to Claim 1, wherein the recognition indicators are determined for each sensor type.

3. Method according to one of the preceding claims, wherein the recognition indicators are at least one of the following: distance between the device and the object at which the object was recognized, a probability with which the object was recognized.

4. Method according to one of the preceding claims, wherein the recognition indicators are related to defined weather conditions or wherein data relating to weather conditions are stored in the high-resolution digital map (300).

5. Method according to one of the preceding claims, wherein the recognition indicators are determined when carrying out the measurement run or after carrying out the measurement run.

6. Method according to one of the preceding claims, wherein the device is a vehicle and the recognition indicators are determined in the vehicle or in the cloud.

7. Method according to one of the preceding claims, wherein, during localization by means of the provided sensor data, location data are created by means of a SLAM algorithm, such that different types of localization by means of the provided sensor data are carried out in the two ways mentioned.

8. Method according to Claim 7, wherein an estimated trajectory is determined by an electronic system (200).

9. Electronic system (200) for providing a high-resolution digital map (300), comprising:
- a localization device (210) for localizing a device;
- at least one sensor device (220a...220n) for providing environmental data captured by way of sensors at a localized position of the device during a measurement run;
- a recognition device (230) for determining recognition indicators for at least one object at the localized position that is recognized by means of the provided environmental data captured by way of sensors; and
- an addition device (240) for adding at least one layer (310a...310n) to the high-resolution digital map (300), wherein the at least one layer (310a...310n) contains the recognition indicators for the at least one recognized object corresponding to the at least one sensor type of the sensor device used to capture the environmental data by way of sensors, which sensor type is used to capture the environmental data by way of sensors,
- wherein, for each sensor type, a layer (310a... 310n) is created for the high-resolution digital map (300) and added to the high-resolution digital map (300).

10. Computer program product comprising program code means for carrying out the method according to one of Claims 1 to 8 when it runs on an electronic system (200) for providing a high-resolution digital map (300) or is stored on a computer-readable data carrier.

## Revendications

1. Procédé pour fournir une carte numérique haute résolution (300), comprenant les étapes consistant à :
- localiser un dispositif, en particulier un véhicule ;
- acquérir par capteurs des données d'environnement au moyen d'au moins un dispositif capteur à une position localisée du dispositif pendant un trajet de mesure du dispositif, les données d'environnement acquises par capteurs étant acquises pour au moins deux des types de capteurs suivants : radar, lidar, caméra, ultrasons ;
- déterminer des indicateurs de détection pour au moins un objet détecté au moyen des données d'environnement acquises par capteurs à la position localisée ;
- ajouter au moins une couche (310a...310n) à la carte numérique haute résolution (300), ladite au moins une couche (310a...310n) comprenant les indicateurs de détection pour ledit au moins un objet détecté conformément à ledit au moins un type de capteur utilisé pour l'acquisition par capteurs des données d'environnement du dispositif capteur utilisé pour l'acquisition par capteurs des données d'environnement,
- dans lequel une couche (310a ... 310n) pour la carte numérique haute résolution (300) est créée pour chaque type de capteur et ajoutée à la carte numérique haute résolution (300)
- dans lequel la carte haute résolution (300) est utilisée pour valider un modèle de capteur en ce que :
- un scénario est extrait du trajet de mesure et à nouveau simulé dans un environnement virtuel,
- une comparaison est effectuée entre les indicateurs de détection déterminés et des indicateurs de détection déterminés au moyen de données d'environnement synthétiques, et
- un écart de performance entre le dispositif capteur et le modèle de capteur est mis en évidence de manière quantifiée.

2. Procédé selon la revendication 1, dans lequel les indicateurs de détection sont déterminés par type de capteur.

3. Procédé selon l'une quelconque des revendications précédentes, dans lequel les indicateurs de détection sont au moins l'un des suivants : distance entre le dispositif et l'objet à laquelle l'objet a été détecté, probabilité avec laquelle l'objet a été détecté.

4. Procédé selon l'une quelconque des revendications précédentes, dans lequel les indicateurs de détection sont liés à des conditions météorologiques définies ou dans lequel des données concernant des conditions météorologiques sont stockées dans la carte numérique haute résolution (300).

5. Procédé selon l'une quelconque des revendications précédentes, dans lequel les indicateurs de détection sont déterminés lors de l'exécution du trajet de mesure ou après l'exécution du trajet de mesure.

6. Procédé selon l'une quelconque des revendications précédentes, dans lequel le dispositif est un véhicule et les indicateurs de détection sont déterminés dans le véhicule ou dans le cloud.

7. Procédé selon l'une quelconque des revendications précédentes, dans lequel, lors de la localisation au moyen des données de capteur fournies, des données de localisation sont créées au moyen d'un algorithme SLAM, de telle sorte que différents types de localisation au moyen des données de capteur fournies sont effectués des deux manières précitées.

8. Procédé selon la revendication 7, dans lequel une trajectoire estimée est déterminée par un système électronique (200).

9. Système électronique (200) pour fournir une carte numérique haute résolution (300), comportant :
- un dispositif de localisation (210) pour localiser un dispositif ;
- au moins un dispositif capteur (220a...220n) pour fournir des données d'environnement acquises par capteurs à une position localisée du dispositif pendant un trajet de mesure ;
- un dispositif de détection (230) pour déterminer des indicateurs de détection pour au moins un objet détecté au moyen des données d'environnement acquises par capteurs fournies à la position localisée ; et
- un dispositif d'ajout (240) pour ajouter au moins une couche (310a...310n) à la carte numérique haute résolution (300), ladite au moins une couche (310a...310n) comprenant les indicateurs de détection pour ledit au moins un objet détecté conformément audit au moins un type de capteur utilisé pour l'acquisition par capteurs des données d'environnement du dispositif capteur utilisé pour l'acquisition par capteurs des données d'environnement,
- dans lequel une couche (310a ... 310n) pour la carte numérique haute résolution (300) est créée pour chaque type de capteur et ajoutée à la carte numérique haute résolution (300).

10. Produit-programme d'ordinateur comprenant des moyens de code programme destinés à mettre en œuvre le procédé selon l'une quelconque des revendications 1 à 8, lorsqu'il est exécuté sur un système électronique (200) pour fournir une carte numérique haute résolution (300) ou lorsqu'il est stocké sur un support de données lisible par ordinateur.
